# EUROPÄISCHE PATENTANMELDUNG

(11) **EP 1 074 359 A2**
(43) Veröffentlichungstag der Anmeldung: **07.02.2001**
(21) Anmeldenummer: 00810612.2
(22) Anmeldetag: 12.07.2000
(51) Int. Cl.: B27M 1/08, B27C 9/04, B23Q 39/02

(54) **Maschine zum Zuschneiden und Fräsen von Balken und deren Verwendung**

(30) Priorität: 26.07.1999 CH 137199
(71) Anmelder: Bassi, Luigi, 6500 Bellinzona (CH)
(72) Erfinder: Bassi, Luigi, 6500 Bellinzona (CH)
(74) Vertreter: Gaggini, Carlo, Dipl.-Ing.

(57) **Zusammenfassung**

Die vorliegenden Erfindung betrifft eine Maschine zum Zuschneiden und Fräsen von Balken und Brettern für Dachstuhl-Zimmermannsarbeiten und für Holzkonstruktionen.

Die vorliegenden Erfindung ist gekennzeichnet durch einen feststehenden horizontalen Trägerbalken (3) längs welchem ein Schlitten (4) fährt, der eine Fräserträger-Spindel (6a) trägt. Die Fräserträger-Spindel (6a) kann um zwei zueinander senkrecht stehenden Achsen (t) und (m) in solcher Weise geschwenkt werden, dass die Neigung der Achse (6a) gegenüber dem Trägerbalken (3) nach Belieben eingestellt werden kann. Ein Untergestell (8), auf dem die zu bearbeitenden Balken (13) horizontal aufgelegt werden, vorzugsweise als eine Gruppe parallel angeordneter Balken und unter dem gewünschten Winkel gegenüber dem Trägerbalken (3), wird auf horizontalen Führungsschienen (10) im rechten Winkel zum Trägerbalken (3) verschoben bzw. zugestellt.

Die einzelnen Balken (13) der zu bearbeitenden Balkengruppe werden alle in einem einzigen Arbeitsgang zugeschnitten indem das Untergestell (8) längs seinen Führungen (10) verschoben bzw. zugestellt wird. Die erfindungsgemässe Maschine ist einfach und kostengünstig und eignet sich besonders für kleine und mittlere Zimmerei-Unternehmen. Die Maschine lässt sich jedoch unter Beibehaltung der Arbeitsprinzipien auch vollständig automatisieren.

## Beschreibung

Die vorliegende Erfindung betrifft eine Maschine zum Zuschneiden und Fräsen von Balken und Brettern für Dachstuhl-Zimmermannsarbeiten und für Holzkonstruktionen sowie deren Verwendung für solche Arbeiten.

Im Dachstuhlbau und generell bei Zimmermannsarbeiten in Holz für Bauten muss der Zimmermann eine grosse Anzahl Balken von vorgegebenem Querschnitt und oft unterschiedlicher Länge zusammenbauen. Insbesondere für Dächer mit zwei oder mehr Dachflächen, beispielsweise mit vier Dachflächen bei einem Walmdach, muss der Zimmermann eine Reihe von an beiden Enden unter vorgegebenem Winkel zugeschnittene oder unterteilte Dachbalken verschiedener Länge vorbereiten, die mit grosser Genauigkeit und untereinander absolut gleich zugerichtet sein müssen, damit die Dachbalken genau zusammengefügt werden können, ohne dass schwierige Korrekturarbeiten und Anpassungen nötig sind. Bei einem Walmdach beispielsweise haben alle Dachbalken einer Dachfläche dieselbe Neigung, jedoch verschiedene Längen, die von der Dachecke bis zum First zunehmen. Der Zimmermann muss daher eine Reihe von Dachbalken zurichten, die an beiden Enden unter gleichem Winkel abgeschnitten sind, jedoch unterschiedliche Längen aufweisen. Zu beachten ist, dass die Schnittwinkel oft komplex sind, da sowohl der Dachneigung als auch dem Kreuzungswinkel zwischen benachbarten Dachflächen Rechnung zu tragen ist, wenn es sich beispielsweise um ein Dach mit mehr als zwei Dachflächen (Giebeldach) handelt. Der Zimmermann steht also oft vor nicht unwesentlichen Geometrie-Problemen.

Die herkömmlichste Art, Balken im gewünschten Winkel und in der richtigen Länge abzuschneiden, besteht auch heute noch darin, die Schnittlinien an jedem Ende jedes Balkens anzuzeichnen (anzureissen) und jeden Schnitt an jedem Balken einzeln auszuführen. Dies erfordert grossen Arbeitsaufwand und grösste Aufmerksamkeit, damit die Längen und Neigungswinkel nicht verwechselt werden.

Im Lauf der letzten Jahre sind Maschinen realisiert worden, die mit auf einer schwenkbaren und Spindel montierten Trennfräsen ausgerüstet sind, und die nach modernsten Regeltechniken mittels numerischer Steuerungen gesteuert arbeiten. Mit solchen automatisierten Maschinen wird die Arbeit des Zimmermanns in Bezug auf das Einstellen der Schnittwinkel gewiss erleichtert. Hingegen weisen sie zwei grundsätzliche Nachteile auf, nämlich dass sie nur einen einzigen Balken pro Arbeitsgang bearbeiten, d.h. dass sie gleichzeitiges Bearbeiten mehrerer Balken mit gleichem Schnittwinkel nicht erlauben, so dass die Arbeitsproduktivität relativ gering bleibt. Ferner sind angesichts der ausgiebigen Verwendung von Steuer- und Antriebsorganen die Kosten solcher Maschinen für kleine und mittlere Zimmereibetriebe in vielen Fällen zu hoch, die daher vorziehen, nach dem oben beschriebenen traditionellen System zu arbeiten.

Der Zweck der vorliegenden Erfindung ist, eine Maschine zum Zuschneiden und Fräsen vorzuschlagen, die erlaubt, alle Enden einer Gruppe von Balken, z.B. solche, die eine Dachfläche bilden und den gleichen Neigungswinkel aufweisen sollen, in einem einzigen Arbeitsgang abzutrennen und zu fräsen. Darüber hinaus soll die Maschine einfach und kostengünstig sein, leicht einzustellen, zuverlässig und mit wenig Wartungsarbeit funktionieren sowie ohne komplizierte elektronische Einstellsysteme wie numerische Steuerungen auskommen. Gerade ihre Einfachheit soll sie auch für kleine und mittlere Zimmereiunternehmen interessant machen, wie sie auch heute noch im Baugewerbe für Dachstuhl- und Zimmermannsarbeiten vorherrschen.

Diese Zielsetzungen werden erreicht mit einer Maschine mit den Eigenschaften gemäss dem kennzeichnenden Teil des Patentanspruchs 1.

Die Neuheit der erfindungsgemässen Maschine besteht im Wesentlichen darin, dass ein verschiebbares Untergestell, auf dem in beliebiger Anordnung ein oder mehrere zu bearbeitende Balken aufgelegt werden können, mit einer Frässpindel kombiniert wird, die auf einem im rechten Winkel gegenüber der Verschieberichtung des Untergestells verschiebbaren Schneidschlitten. Dank der Auslegung, dass die Frässpindel um zwei im rechten Winkel zu einander stehenden Achsen verschwenkbar angeordnet ist, gelingt es leicht, jeden Schnittwinkel ohne komplizierte Berechnungen einzustellen. Die Arbeit des Zimmermanns wird dadurch rationell und leicht ausführbar, und die falschen Schnitte sowie die entsprechende Ausschussmenge reduzieren sich.

Die vorliegenden Erfindung wird anhand eines Ausführungsbeispiels unter Bezugnahme auf die Abbildungen im Folgenden näher beschrieben.

Die Abbildungen zeigen in der:
- Fig. 1: Eine erfindungsgemässe Maschine im Aufriss,
- Fig. 2: Die Maschine gemäss der Fig. 1 im Grundriss,
- Fig. 3: Ein vergrössertes Detail gemäss der Fig. 1 zur besseren Darstellung der Arbeitsorgane der Maschine,
- Fig. 4: Dasselbe Detail gemäss der Fig. 3, jedoch im Grundriss in Analogie zur Darstellung in der Fig. 2 dargestellt, und in der
- Fig. 5: Eine schematische Darstellung einer zweiten bevorzugten Anwendungsart der Maschine, in diesem Fall eingerichtet zum Anbringen von Längsschlitzen oder Ausfräsungen längs eines Balkens.

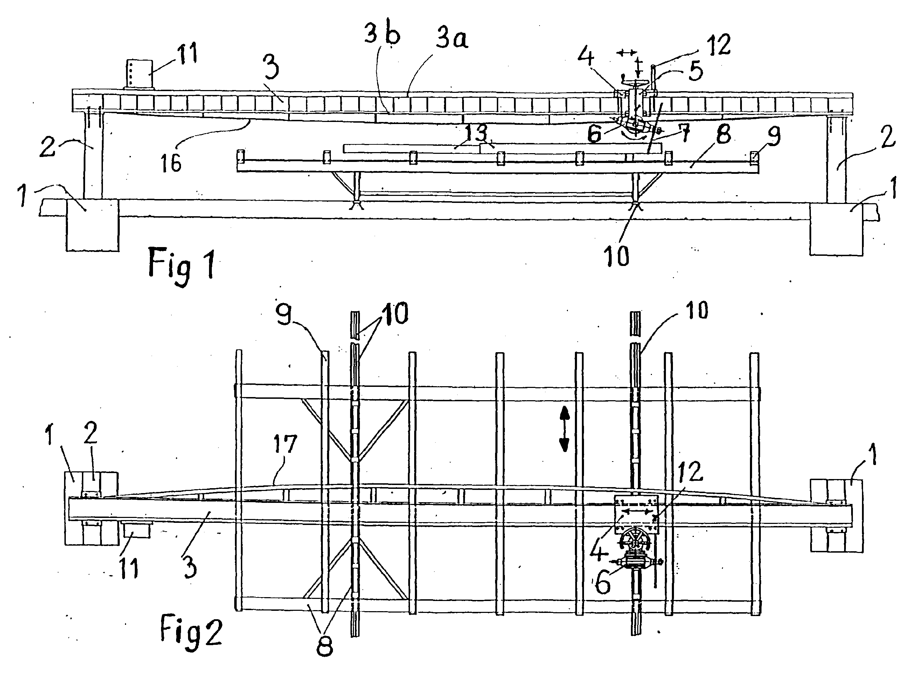

In den Figuren 1 und 2, in welchen die gleiche Maschine im Aufriss und im Grundriss dargestellt ist, lassen sich die folgenden Elemente unterscheiden:

Auf den sogenannten Sockeln 1 des Maschinenfundaments, die in solcher Weise in den Boden eingelassen sind, dass die erforderliche Schwingungsfestigkeit gewährleistet ist, sind zu beiden Seiten der Maschine starre Säulen 2 befestigt, auf welche sich ein durchgehender Trägerbalken 3 abstützt, der die beiden Säulen 2 verbindet. Der durchgehende Trägerbalken 3 ist mit Gleitführungen 3a und 3b versehen, längs welchen sich ein Schlitten 4 über den ganzen Balken 3 verschieben lässt, der mit einer Feststellvorrichtung (nicht gezeigt) versehen ist, mittels welcher der Schlitten 4 an jedem beliebigen Punkt längs des Trägerbalkens 3 fixiert werden kann.

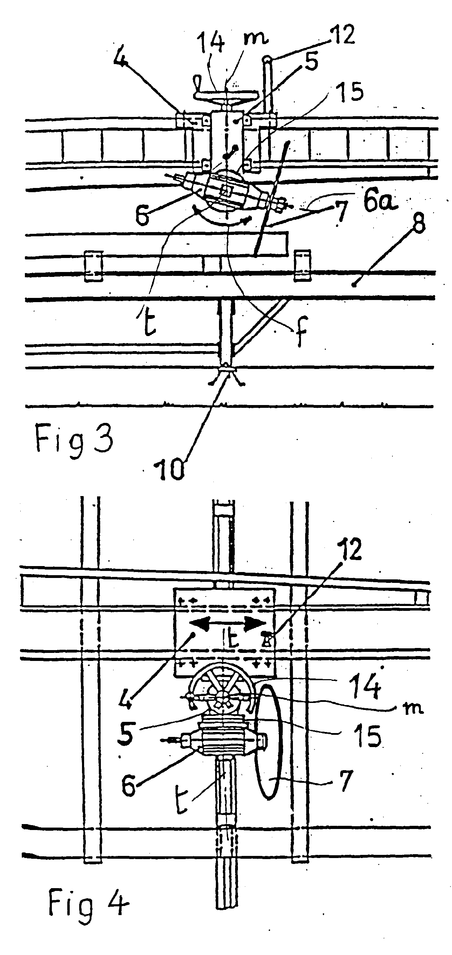

Am Schlitten 4 ist eine Vertikalführung 5 angebracht, die mit einem vertikal ausgerichteten Schraubengewinde (nicht gezeigt) versehen ist, die mittels eines Handrades 14 (vergleiche die Figuren 3 und 4, in welchen dieses Detail vergrössert dargestellt ist) in solcher Weise bewegt werden kann, dass die Höhenstellung verändert werden kann, wobei der Motor 6 mittels einer drehbaren Platte 15 an der Vertikalführung 5 befestigt ist. Die Achse des Motors 6 bildet die Frässpindel 6a eines Fräswerkzeugs 7, das als kreisrunde Scheibe (wie in den Figuren 1 bis 4 dargestellt) oder als anderer Werkzeugtyp ausgebildet sein kann wie beispielsweise als zylindrischer Fingerfräser bzw. als Profilfräser. Die Art des im Spannfutter, das auf der Spindel des Motors 6 sitzt, einzusetzenden Fräsers 6a hängt von der Art der auszuführenden Arbeit ab, wie dies im Folgenden dargelegt wird.

Die drehbare Platte 15 bildet sodann eine horizontal ausgerichtete Achse t (Figuren 3 und 4), um welche die Fräserträger-Spindel 6a bzw. der Antriebsmotor 6 um 90° aus einer horizontalen in eine vertikale Stellung verschwenkt werden kann. Im Sinne eines Beispiels ist in den Figuren 1 bis 4 die Fräserträger-Spindel 6a in einer gegenüber der Horizontalen um etwa 15° geneigten Stellung dargestellt. Der Pfeil f deutet diese Möglichkeit der Verschwenkung der Fräserträger-Spindel 6a um die horizontal ausgerichtete Achse t an. Die Verschwenkachse t ihrerseits ist mit dem Schlitten 4 über eine vertikal ausgerichtete Verschwenkachse m verbunden, die ein horizontales Verschwenken der Verschwenkachse t ermöglicht, auf der die Fräserträger-Spindel 6a sitzt. In dieser Weise erhält die Fräserträger-Spindel 6a grosse Bewegungsfreiheit, da sie um zwei Achsen über je 90° verschwenkt werden kann, von welchen die eine, nämlich die Achse t, immer horizontal ausgerichtet bleibt, aber ihrerseits um eine vertikale Achse m über 90° geschwenkt werden kann. Selbstverständlich ist diese Konstruktion mit den geeigneten Stützorganen für die Drehung ausgebildet und mit den jedem Fachmann auf dem Gebiet bekannten Mitteln zur genauen Einstellung der Winkelgrade der Verschwenkung (Nonius) und zur Fixierung der gewählten Einstellung versehen. Solche Vorrichtungen sind aus dem normalen Werkzeugmaschinenbau bekannt und bedürfen an dieser Stelle keiner weiteren speziellen Erklärungen im Detail.

Diese Anordnung eines feststehenden Trägerbalkens 3 mit dem darauf verschiebbar angeordneten Schlitten 4 wird ergänzt durch das Untergestell 8, das auf horizontalen Führungen 10 verschiebbar ist, die auf oder im Fussboden angeordnet (d.h. darauf abgestützt oder darin eingelassen) sind. Die Führungen 10 erstrecken sich im rechten Winkel zum feststehenden Trägerbalken 3 in solcher Weise dass das Untergestell 8 eine horizontale Verschiebungsbewegung gegenüber dem Trägerbalken 3 ausführen kann. Für die Verschiebung des Untergestells 8 auf den Führungsschienen 10 (die vorzugsweise wie ein Geleise ausgebildet sind) ist das Untergestell 8 mit Rollen (nicht gezeigt) ausgestattet. Die Bewegung des Untergestells kann von Hand durch einfaches Stossen am Wagen oder mittels eines motorisierten Systems erzeugt werden, wobei das Stossen von Hand die bevorzugte Lösung darstellt, da die Maschine dadurch möglichst einfach bleibt, und da vor allem die Vorschubgeschwindigkeit bzw. Zustellgeschwindigkeit des Untergestells 8 der Leistungsfähigkeit des Fräsers 7 angepasst werden kann. In der Tat kann der Maschinenbediener die Arbeitsbedingungen des Fräswerkzeugs am besten beurteilen, was eine grundlegende Voraussetzung ist , wenn beispielsweise verhindert werden soll dass der Fräser wegen zu schnellem Vorschub des abzutrennenden oder auszufräsenden Stückes 13 anhängt und blockiert.

Mit 9 sind sodann die auf dem Untergestell 8 verschiebbar angeordneten Trägerholme bezeichnet, deren Stellung in der Längsrichtung gegenüber dem Untergestell 8 nach Bedarf angepasst werden kann. Die Trägerholme 9 bilden die eigentliche Abstützfläche für das zu bearbeitende Material 13, und deshalb werden sie auf dem Untergestell 8 in solcher Weise angeordnet, dass sie eine gute Abstützfläche bilden ohne die Arbeit des Fräswerkzeugs 7 zu stören. Dies wird anhand der Beschreibung der bevorzugten Anwendungsarten der erfindungsgemässen Maschine im Folgenden verdeutlicht.

Im weiteren ist mit 11 eine elektrische Steuertafel angedeutet, die mit den erforderlichen Schaltknöpfen für den Betrieb des Motors 6 und der Fräserträger-Spindel 6a (welcher überigens der einzige in dieser Maschine unbedingt erforderliche Motor ist, während alle übrigen Verschiebungen - des Schlittens 4 und des Untergestells 8 - vorzugsweise von Hand bewerkstelligt werden) und für dessen normales Ausschalten oder notfallmässiges Ausschalten (Notaus-Pilz).

Mit 12 sind Sensoren bezeichnet, die das Ingangsetzen der Maschine und insbesondere des Motors 6 verhindern, solange sich Personen in der Nähe des Arbeitsbereichs des Fräwerkzeugs 7 befinden. Dabei handelt es sich um eine Schutzvorrichtung für die Sicherheit.

Der grosse Vorteil der Maschine besteht hauptsächlich in ihrer äussersten Einfachheit und ihrer leichten Bedienbarkeit, da sie, wie später darzulegen ist, erlaubt, eine ganze Reihe von Balken "vom gleichen Typ" (d.h. die zur gleichen Dachfläche gehörenden Balken von untereinander unterschiedlicher Länge) unter beträchtlicher Zeiteinsparung gleichzeitig zuzuschneiden. Auf diesen Punkt ist in der Beschreibung der Arbeitsweise der Maschine zurückzukommen.

Gemäss einer ersten bevorzugten Ausführungsform der vorliegenden Erfindung, welche ein leichteres Anpassen der Schnitt- und Frästiefe des Fräswerkzeugs 7 bezweckt, insbesondere wenn es darum geht, die Maschine zum Anbringen von Nuten und Profilen zu verwenden, kann die Stellung der horizontalen Schwenkachse t in ihrer Höhe eingestellt mittels eines Einstellgewindes (nicht gezeigt) eingestellt werden, das mit Hilfe des Handrades 14 bewegt wird. Selbstverständlich kann dieses Handrad 14 auch durch ein motorgetriebenes System ersetzt und in geeigneter Weise gesteuert werden: dies geht jedoch zu Lasten der Einfachheit der Maschine und ist schlussendlich hinsichtlich der Auswirkungen bei der Realisierung der vorliegenden Erfindung als unnötig zu betrachten.

Gemäss einer anderen bevorzugten Variante der vorliegenden Erfindung weist der feststehende Trägerbalken 3 eine Länge zwischen 5 und 15 Metern auf. Die Länge des feststehenden Trägerbalkens legt die Hauptabmessung und die Anwendungsmöglichkeiten der Maschine fest sowie die Kosten der Ausführung. Dabei spielt die Steifigkeit des feststehenden Trägerbalkens eine Hauptrolle (und in den Figuren 1 und 2 ist dargestellt, in welcher Weise der feststehende Trägerbalken 3 mit Verstärkungen 16 und 17 versehen ist, damit das Trägheitsmoment in den beiden Hauptachsen erhöht wird). Die angegebenen Abmessungen sind ideal geeignet für die Ausführung einer Maschine gemäss der vorliegenden Erfindung unter optimalen Arbeitsbedingungen.

Hinsichtlich des gewählten Typs des Fräswerkzeugs 7 ist zu bemerken, dass es sich um eine Frässcheibe handeln kann zur Ausführung von Schneid- und Ablängarbeiten, wobei für diesen Fall der günstigste Durchmesser zwischen 30 und 100 cm liegt. Dies erlaubt die Bearbeitung von Balken der üblichen Abmessungen und genügt im allergrössten Teil der Anwendungsfälle.

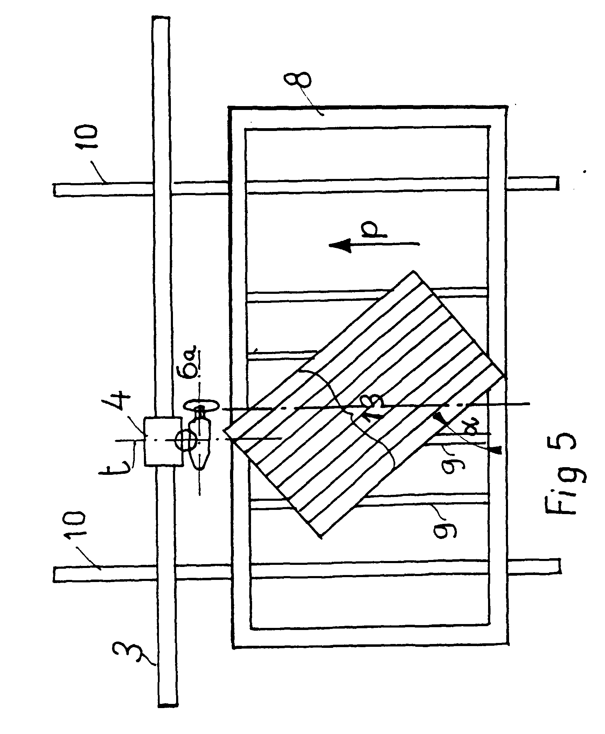

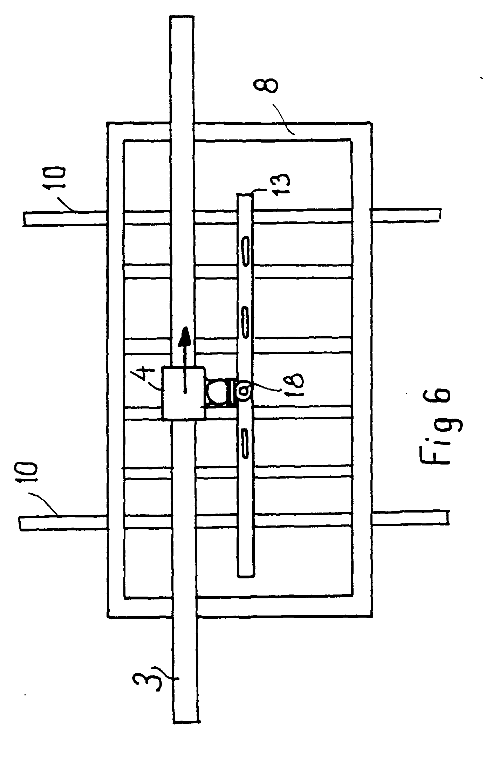

Natürlich kann als Fräswerkzeug auch gemäss einem weiteren Ausführungsbeispiel der erfindungsgemässen Maschine ein Profilfräser oder ein zylindrischer Fingerfräser gewählt werden, wie dies in der Fig. 6 unter der Bezugsziffer 18 gezeigt ist. Die zwei bevorzugten Arbeitsweisen der erfindungsgemässen Maschine werden im Folgenden unter Bezugnahme auf die Figuren 5 und 6 erläutert.

In der Fig. 5 ist eine erste bevorzugte Arbeitsweise dargestellt, bei welcher der Schlitten 4 an einer vorbestimmten Stelle längs des Trägerbalkens 3 fixiert wird. Die Fräserträger-Spindel 6a ihrerseits wird in einer Stellung fixiert, in der die Verschwenkachse t im rechten Winkel zum Trägerbalken 3 ausgerichtet ist, während das Untergestell 8 auf seinen horizontalen Führungsschienen 10 verschoben wird. Die zu bearbeitenden Balken 13, die auf dem Untergestell 8 bzw. auf dessen Trägern 9 unter einem Winkel a vorzugsweise in einer Gruppe einer neben dem anderen aufgelegt sind, werden auf einfache Weise zugeschnitten, indem das Untergestell 8 in der Richtung des Pfeils p zugestellt wird, natürlich nachdem die Fräserträger-Spindel 6a richtig, d.h. entsprechend dem gewünschten Neigungswinkel eingestellt wurde. Die Kombination des Winkels a mit dem Neigungswinkel der Fräserträger-Spindel 6a gegenüber der Horizontalen erlaubt das Zuschneiden von allen Balken einer Dachfläche in einer einzigen Operation und auch, wie sich leicht nachprüfen lässt, in einem einzigen Arbeitsgang die Balken für die je beiden benachbarten Dachflächen eines Walmdachs mit vier Dachflächen. Dies bringt erhebliche Zeiteinsparungen dank einer hohen Rationalisierung der Arbeitsabläufe unter Verwendung einfachster Mittel.

Eine andere bevorzugte Anwendungsart der erfindungsgemässen Maschine, die in der Fig. 6 schematisch dargestellt ist, besteht in der Möglichkeit, in den zu bearbeitenden Balken 13 Schlitze bzw. Profile in Längsrichtung zu fräsen. Hierfür werden der oder die zu bearbeitenden Balken 13 parallel zum Trägerbalken 3 auf dem Untergestell 8 aufgelegt. Das Untergestell 8 wird dann in seiner Stellung fixiert und der Schlitten 4 verschiebt sich längs der Führungen 3a und 3b des Trägerbalkens. In solcher Weise lassen sich je nach der Art des auf der Fräserträger-Spindel 6a eingespannten Fräswerkzeugs 7 (das eine Frässcheibe 7 sein kann oder beispielsweise ein zylindrischer Fingerfräser, usw.) spezielle Bearbeitungen an dem oder den Balken, wie etwa des Anbringen von Längsschlitzen für das Zusammenfügen, Fräsarbeiten an einem Teil der seitlichen oder oberen Oberfläche des Balkens, usw.

Diese Art der Verwendung, die sich von der vorher beschriebenen unterscheidet, bei welcher das Untergestell 8 zugestellt wird, während der Schlitten 4 auf dem Trägerbalken 3 fixiert bleibt, zeigt die grosse Vielseitigkeit der Verwendbarkeit der erfindungsgemässen Maschine, deren Hauptzweck jedoch das Zuschneiden einer Gruppe von Balken in einem einzigen Arbeitsgang bleibt, die den gleichen Neigungswinkel erhalten sollen, was möglich ist dank der Anordnung der zu bearbeitenden Balken nebeneinander und unter einem vorgegebenen Neigungswinkel, der etwa dem Neigungswinkel der Dachfläche entspricht, auf dem Untergestell 8.

Die erfindungsgemässe Maschine ist als einfache und kostengünstige Konstruktion konzipiert, weshalb vorzugsweise auf eine Mechanisierung oder sogar Automatisierung von Transportvorrichtungen für das Untergestell 8 und für den Schlitten 4 verzichtet wird (wobei das Stossen von Hand durch die Bedienungsperson vorgezogen wird) sowie auf jene für die Schwenkungen der Fräserträger-Spindel 6a um die beiden Schwenkachsen t und m.

Natürlich wäre es möglich, immer noch im Rahmen der vorliegenden Erfindung, bei dieser Maschine alle diese Antriebs- und Steuerungssysteme einzubauen, welche die heutige Technologie jedem Fachmann auf dem Gebiet zur Verfügung stellen kann. In diesem Fall könnte gewiss eine beachtliche Steigerung der Produktivität der Maschine erreicht werden, jedoch zu Lasten der Einfachheit und der Kosten. Eine hoch automatisierte Maschine, die jedoch nach dem Prinzip der vorliegenden Erfindung arbeitet, würde sich daher besser für grosse Zimmereibetriebe eignen als für die kleinen und mittleren, an die sich der vorliegende Vorschlag besonders wendet.

### Liste der in den Figuren verwendeten Bezugsziffern

- 1: Sockel
- 2: Säule
- 3: Trägerbalken 3a, 3b Längsführungen
- 4: Schlitten
- 5: Vertikalführung
- 6: Antriebsmotor 6a Fräserträger-Spindel
- 7: Fräswerkzeug
- 8: Untergestell
- 9: Verschiebbare Träger
- 10: Horizontale Führungen
- 11: Steuertafel
- 12: Sensoren
- 13: Zu bearbeitende Balken
- 14: Handrad
- 15: Drehbare Platte
- 16: Verstärkung des Trägerbalkens 13
- 17: Verstärkung des Trägerbalkens 13
- 18: Profilfräser

## Patentansprüche

1. Maschine zum Zuschneiden und Fräsen von Holzbalken und -Brettern für Dachstuhl-Zimmermannsarbeiten und für Holzkonstruktionen,
gekennzeichnet durch die folgenden Elemente:
- Ein über dem Boden angebrachter, feststehender horizontaler Trägerbalken(3) mit Längsführungen (3a, 3b) zum Führen eines Zuschneide-Schlittens (4),
- Ein Zuschneide-Schlitten(4), der längs den Führungen (3a, 3b) des feststehenden Trägerbalkens (3) geführt wird, ist mit einer Fixiervorrichtung zum Fixieren des Schlittens (4) versehen sowie mit
- Einer Fräserträger-Spindel (6a), die mittels eines Elektromotors (6) angetrieben wird, und die mit dem Schlitten (4) über eine horizontale Schwenkachse (t) in solcher Weise verbunden ist, dass sie über 90° aus einer horizontalen in eine vertikale Stellung geschwenkt werden kann, wobei die horizontale Schwenkachse (t) ihrerseits über eine vertikale Schwenkachse (m) mit dem Schlitten (4) in solcher Weise verbunden ist, dass die horizontale Schwenkachse (t), auf welcher die Fräserträger-Spindel (6a) befestigt ist, über 90° verschwenkt werden kann, und
- Ein Untergestell (8), das auf horizontalen Führungen (10), das auf dem Fussboden im rechten Winkel zum feststehenden Trägerbalken (3) verschoben werden kann, und zur Aufnahme der zuzuschneidenden und/oder anzufräsenden Holzbalken (13) dient.

2. Maschine zum Zuschneiden und Fräsen von Balken und Brettern gemäss dem Anspruch 1,
dadurch gekennzeichnet, dass
die Stellung der horizontalen Schwenkachse (t) in ihrer Höhenlage mittels einer Einstellschraube eingestellt werden kann.

3. Maschine zum Zuschneiden und Fräsen von Balken und Brettern gemäss dem Anspruch 1,
dadurch gekennzeichnet, dass
die Länge des feststehenden Trägerbalkens (3) zwischen 5 und 15 m liegt.

4. Maschine zum Zuschneiden und Fräsen von Balken und Brettern gemäss dem Anspruch 1,
dadurch gekennzeichnet, dass
das Fräswerkzeug (7) ein Scheibenfräser mit einem Durchmesser von 30 bis 100 cm ist.

5. Maschine zum Zuschneiden und Fräsen von Balken und Brettern gemäss dem Anspruch 1,
dadurch gekennzeichnet, dass
das Fräswerkzeug (7) ein Profilfräser ist.

6. Verwendung der Maschine zum Zuschneiden und Fräsen von Balken und Brettern gemäss einem der Ansprüche 1 bis 5,
dadurch gekennzeichnet, dass
der Zuschneideschlitten (4) an einer vorbestimmten Stelle längs des Trägerbalkens (3) fixiert wird, die Fräserträger-Spindel (6a) in einer Stellung fixiert wird, in welcher die horizontale Schwenkachse (t) im rechten Winkel zum Trägerbalken (3) steht und das Untergestell (8) auf seinen horizontalen Führungen (10) in solcher Weise verschoben bzw. zugestellt wird, dass ein oder mehrere auf dem Untergestell (8) in geeigneter Weise aufgelegten Balken oder Bretter (13) zugeschnitten oder gefräst werden können.

7. Verwendung der Maschine zum Zuschneiden und Fräsen von Balken und Brettern gemäss einem der Ansprüche 1 bis 5,
dadurch gekennzeichnet, dass
der oder die zu bearbeitenden Balken (13) auf dem Untergestell (8) parallel zum Trägerbalken (3) angeordnet sind, die Stellung des Untergestells (8) fixiert wird, und dass sich der Schlitten (4) längs den Führungen (3, 3b) auf dem Trägerbalken (3) verschiebt.
